# EUROPÄISCHE PATENTSCHRIFT

(11) **EP 2 145 163 B1**
(45) Veröffentlichungstag und Bekanntmachung des Hinweises auf die Patenterteilung: **14.09.2016**
(21) Anmeldenummer: 08733816.6
(22) Anmeldetag: 25.04.2008
(51) Int. Cl.: G01G 19/08, B65F 3/04

(54) **DYNAMISCHE SCHÜTTUNGSWAAGE**
DYNAMIC SCALE FOR BULK MATERIAL
DISPOSITIF DYNAMIQUE DE PESAGE DE DÉCHETS

(30) Priorität: 26.04.2007 CH 686072007
(43) Veröffentlichungstag der Anmeldung: 20.01.2010
(73) Patentinhaber: Digi Sens Ag, 3280 Murten (CH)
(72) Erfinder: LUSTENBERGER, Martin, CH-1752 Villars sur Glâne (CH)
(74) Vertreter: Stump, Beat
(86) Internationale Anmeldenummer: PCT/CH2008/000190
(87) Internationale Veröffentlichungsnummer: WO 2008/131574

(56) Entgegenhaltungen:
- EP-A- 0 638 787
- EP-B1- 1 147 383
- WO-A-97/40352
- DE-A1- 4 439 342

## Beschreibung

Die vorliegende Erfindung betrifft eine dynamische Schüttungswaage, insbesondere für Abfallsammelfahrzeuge, nach dem Oberbegriff von Patentanspruch 1. Der Begriff der dynamischen Waage beschreibt die Tatsache, dass der Wiegevorgang während des Anhebens des gefüllten und Absenkens des geleerten Behälters vollzogen wird, in aller Regel während des Durchfahrens eines geeignet definierten Wiegefensters.

Dynamische Waagen, auch für Abfallsammelfahrzeuge, sind bekannt, beispielsweise aus WO 97/40352 (D1). Eine weitere Veröffentlichung aus der gleichen Erfindungsklasse liegt vor in EP 0 638 787 (D2). In beiden Veröffentlichungen werden sog. Schüttungswaagen offenbart, bei welchen mittels geeigneter Sensoren die Durchbiegung der Hubarme der Abfall-Hub- und Wiegeeinrichtung gemessen wird. In D1 ist pro Arm der Hubvorrichtung ein Dehnmessstreifen (DMS) zur Messung des Biegemomentes vorgesehen, in D2 sind es deren zwei. Dies hat den Vorteil, dass die prinzipiell unsichere Lage des Schwerpunktes mit arithmetischen Mitteln eliminiert werden kann. Das Anbringen eines Beschleunigungssensors in der Nähe der Nutzlast ist ebenfalls aus D2 bekannt. Die Gewichts- oder Massenermittlung über das Messen von Biegemomenten wird in aller Regel bevorzugt, da der Integrationsaufwand ebenfalls relativ klein ist. Das Messen von Biegemomenten beruht vornehmlich darauf, entweder eine lokale Verlängerung auf der Aussenseite und/oder eine lokale Verkürzung auf der Innenseite eines durchgebogenen Stabes zu messen. Der Nachteil dieser Messmethode liegt jedoch in der starken Abhängigkeit des gemessenen Biegemomentes vom Ort des Lastangriffs. Die in D2 vorgeschlagene Messmethodik ist zwar elegant, hat jedoch gegenüber jener von D1 einen erhöhten Integrationsaufwand zur Folge; ferner bleibt ein wesentlicher Nachteil der Messung von Momenten mittels DMS bestehen: Die üblicherweise dafür verwendeten DMS werden aussen auf die für die Hubarme verwendeten Hohlprofile aufgebracht. Damit sind sie stark dem rauen Betrieb des Kehrichteinsammelns ausgesetzt.

Die Aufgabe der vorliegenden Erfindung ist es, eine Vorrichtung zu schaffen, welche nicht die Biegemomente zur Lastbestimmung misst und welche ferner so angebaut werden kann, dass die eigentliche Messvorrichtung vor den Betriebsverhältnissen bestmöglich geschützt ist. Die Lösung der gestellten Aufgabe ist wiedergegeben im kennzeichnenden Teil des Patentanspruches 1 hinsichtlich ihrer wesentlichen Merkmale, in den folgenden Patentansprüchen hinsichtlich weiterer vorteilhafter Ausbildungen.

Die erfindungsgemässe Kehrichtsammel- und Wiegevorrichtung kann über die Schubspannung in den Schwenkarmen die Masse eines Kehrichtbehälters bestimmt werden, einmal im vollen, nach dem Entleeren im leeren Zustande. Um diese Massenermittlung auch im bewegten Zustande der ganzen Hubvorrichtung vornehmen zu können, ist an der Hubvorrichtung an geeigneter Stelle ein Beschleunigungsmesser angebaut. Mit diesem lässt sich sowohl die allfällige Schiefstellung des Müllsammelfahrzeuges, als auch die lokale Beschleunigung des Kehrichtbehälters ermitteln, dies sowohl beim Anheben des vollen Kehrichtbehälters, als auch beim Absenken des leeren. Eine eigentliche dynamische Wägung wird so ermöglicht, welche die Notwendigkeit des Anhaltens der Hub- und Wiegevorrichtung sowohl beim Anheben, als auch beim Absenken des Kehrichtbehälters erübrigt.

Anhand der beigefügten Zeichnungen wird der Erfindungsgegenstand näher erläutert. Es zeigen
- Fig. 1: eine Seitenansicht der Vorrichtung,
- Fig. 2: eine vergrösserte Seitenansicht eines Ausschnittes von Fig. 1,
- Fig. 3: eine vergrösserte Ansicht eines Ausschnittes von Fig. 2.

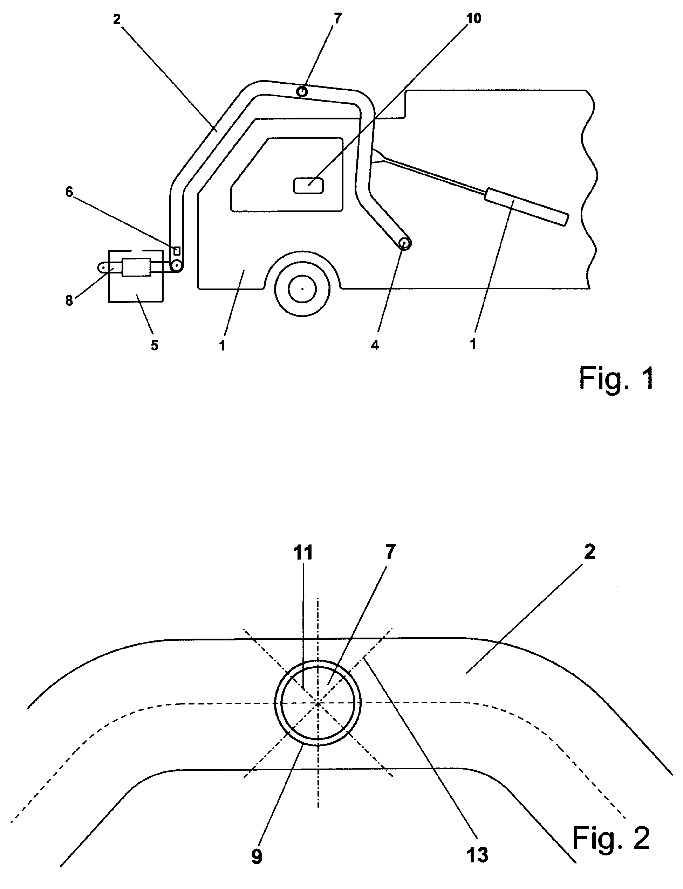

Die Fig. 1 ist eine Seitenansicht eines Kehrichtsammelfahrzeuges 1 mit einem von hier zwei miteinander verbundenen Schwenkarmen 2 und einem (ebenfalls von zwei) Hydraulikzylindern 3. Die Schwenkarme 2 sind am Kehrichtsammelfahrzeug 1 an geeigneter Stelle in Schwenkgelenken 4 schwenkbar gelagert und an ihren freien Enden mit Lastaufnahmearmen 8 zur Aufnahme eines Kehrichtbehälters 5 oder auch von deren zwei eingerichtet, wie bekannt. Die Schwenkarme 2 tragen, ebenfalls an ihren freien Enden, einen - oder falls sie unabhängig voneinander beweglich sind, je einen - Beschleunigungssensor 6. Ein Rechner 10 zum Auswerten der nachfolgend beschriebenen Messresultate und jener der Beschleunigungssensoren 6, zum Registrieren von Kundendaten und zum Protokollieren aller Messwerte ist vorzugsweise in der Fahrerkabine des Kehrichtsammelfahrzeuges 1 eingebaut. Die Schwenkarme 2 tragen je ein Loch 7 (siehe auch Fig.), in welches vorzugsweise ein Rohr 9 mit kreisförmigem Querschnitt beispielsweise bündig eingeschweisst ist. Die Längsachse des Rohres 9 verläuft senkrecht zur neutralen Faser 12 jedes Schwenkarmes 2. Bei Belastung der Schwenkarme 2 durch einen vollen oder leeren Kehrichtbehälter 5 und auch durch das Eigengewicht der aus den Elementen 2, 3 und 8 bestehenden Hubvorrichtung wirkt - neben der Biegespannung auch eine Schubspannung auf den Schwenkarm 2, welche das Loch 7 und das darin eingesetzte Rohr zur Ellipse verformt, wobei deren kürzere Achse die Ziffer 11, die Längere die Ziffer 13 trägt, bei der gleichen Orientierung von Fig. 2 und Fig. 1.

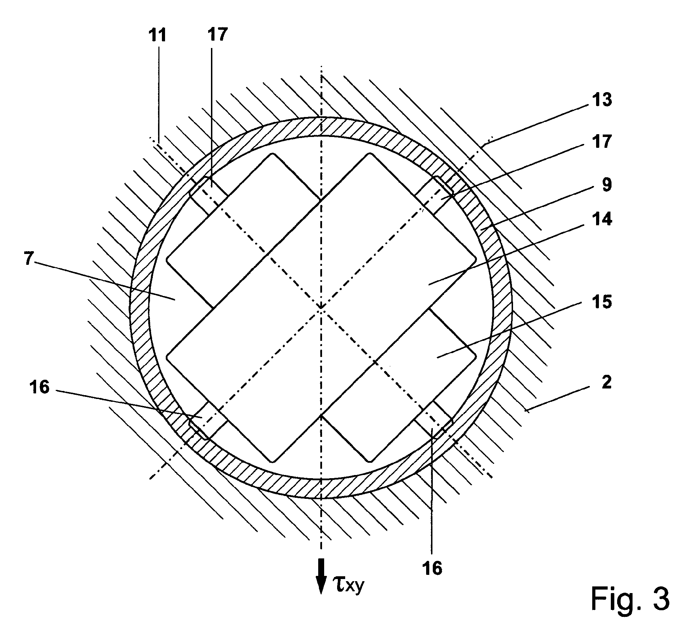

Fig. 3, wiederum gleich orientiert, wie Fig. 1 und Fig. 2, zeigt zwei Sensoren 14, 15, welche in das Loch 7 eingesetzt sind; der erste Sensor 14 in Richtung der längeren Achse 13 der zu erwartenden Ellipse, der zweite Sensor 15 in der Richtung der kürzeren Achse 11. Die beiden Sensoren 14, 15 sind, hintereinander in der Richtung der Achse des Rohres 9 versetzt, in einem Winkel von im Wesentlichen 90° zueinander, angeordnet. Ferner stehen sie unter je einem Winkel von im Wesentlichen ± 45° verdreht zu jener der Tensorkomponente *τ_{xy}* der Schubspannung *τ*. Jeder der beiden Sensoren 14, 15 hat zwei Krafteingänge 16, 17 welche beispielsweise je in eine geeignet angebrachte Vertiefung in der Wandung des Rohres 9 mit Vorspannung eingesetzt sind. Eine weitere Möglichkeit des Einsetzens der Sensoren 14, 15 besteht darin, die Krafteingänge 16, 17 an je zwei im Rohr 9 eingeschweisste Laschen anzuschrauben. Der an sich bekannte innere Aufbau der Sensoren 14, 15 bewirkt, dass sich die Spannung einer schwingenden Saite in jedem der Sensoren 14, 15 ändert, wenn die wegabhängige Kraft auf die beiden Krafteingänge 16, 17 ändert. Damit wird die Verkürzung des einen Durchmessers des Rohres 9 und die Vergrösserung des anderen gleichzeitig gemessen und durch den Rechner 10 miteinander in Beziehung gesetzt. Die gleichzeitige Messung am gleichen Orte hat den Vorteil, dass die Temperaturen der beiden Sensoren 14, 15 ebenfalls die gleichen sind, so dass die Messresultate im Wesentlichen von einem Temperaturgang der Sensoren befreit sind.

Zum Schutz vor störenden Umwelteinflüssen, wie Staub, Feuchtigkeit und mechanischen Einflüssen kann das Rohr 9 auf beiden Seiten so verschlossen werden, dass diese genannten Einflüsse ferngehalten werden.

Selbstverständlich kann die Vorrichtung, bestehend aus den Schwenkarmen 2, den Lastaufnahmearmen 8 und den Sensoren 14, 15, sowohl seitlich als auch am Heck des Kehrichtsammelfahrzeuges angebracht werden. Dies bei geeigneter Formgebung der Schwenkarme 2.

Die Schwenkarme 2 können sowohl fest verbunden oder einzeln bewegbar sein. Sollen sie im letzteren Fall im Verbund arbeiten, so kann dieser Verbund - in an sich bekannter Weise - durch koordiniertes Betätigen der Hydraulikzylinder oder durch optische Koordination der Schwenkarme bewirkt werden. Der Wiegevorgang erfolgt nun beim Anheben der Schwenkarme 2. Während des Anhebens durchfahren diese ein sog. Wiegefenster. Das Wiegefenster wird in aller Regel am konkreten Typ eines Kehrichtsammelfahrzeuges ermittelt. Sein unterer Rand kann beispielsweise durch den stossfreien Lauf der Hydraulikkomponenten definiert sein, sein oberer durch das selbständige Öffnen des Deckels des Kehrichtbehälters. Das Wiegefenster umfasst also die dynamisch glatte Phase des Hub- und Absenkvorganges. Das Vorhandensein des Beschleunigungssensors 6 erlaubt also einerseits das Eingrenzen des Wiegefensters, anderseits gestattet es, die Beschleunigungskräfte zu messen, welche auf die zu wiegende Masse (brutto und Tara) einwirken. Ist das Wiegefenster dynamisch einmal etabliert, so kann es auch durch vorzugsweise berührungslose Schalter definiert werden, welche durch das Vorbeifahren beispielsweise des oder der Hubarme (2) initialisiert wird.

Der Rechner 10 erlaubt, die gesuchten Massewerte von den zusätzlichen Beschleunigungskräften rechnerisch zu befreien und so den wahren Massenwert des aufgeladenen Kehrichts festzustellen und zu protokollieren.

Nach Erreichen der Soll-Position über der Schüttöffnung (nicht dargestellt) des Kehrichtsammelfahrzeuges 1 wird der Kehrichtbehälter entleert und die Schwenkarme werden, wiederum durch das Wiegefenster, zurückgefahren. Das Nettogewicht des Kehrichts wird nun im Rechner 10 als Netto = Brutto - Tara ermittelt, wie bekannt.

## Patentansprüche

1. Dynamische Schüttungswaage mit zwei Schwenkarmen (2), welche einzeln oder im Verbund bewegt werden können, zwei Hydraulikzylindern (3) und je mindestens einem Lastaufnahmearm (8) pro Schwenkarm (2), **dadurch gekennzeichnet, dass**
- in jedem Schwenkarme (2) Mittel vorhanden sind, um die Schubspannung in diesem Schwenkarm zu messen,
- jeder unabhängig bewegliche Schwenkarm (2) einen Beschleunigungssensor (6) trägt, mit welchem die Massenermittlung um den aktuellen Beschleunigungswert bereinigt werden kann.

2. Dynamische Schüttungswaage nach Patentanspruch 1, **dadurch gekennzeichnet, dass** die Mittel um die Schubspannung im Schwenkarm (2) zu messen, bestehen aus
- einem Rohr (9), welches in ein Loch (7) quer zur neutralen Faser der Biegespannung des Schwenkarmes (2) eingesetzt und in diesem Loch (7) eingeschweisst ist,
- mindestens einem Sensor (14, 15), welcher quer zur Längsachse des Rohres (9) in dieses eingesetzt ist und die Änderungen des Durchmessers des Rohres (9) unter dem Einfluss der Schubspannung messen kann,
- dieser mindestens eine Sensor (14, 15) im Wesentlichen unter einem Winkel von ± 45° zur Richtung der Schubspannung *τ_{xy}* des Schwenkarmes (2) eingesetzt ist.

3. Dynamische Schüttungswaage nach Patentanspruch 2, **dadurch gekennzeichnet, dass** zwei Sensoren (14, 15) im Rohr (9) eingesetzt sind und unter einem gegenseitigen Winkel von im Wesentlichen 90° zueinander angeordnet sind, wobei der eine Sensor (14) die Vergrösserung des Durchmessers des Rohres (19) misst, der andere Sensor (15) dessen Verkleinerung.

4. Dynamische Schüttungswaage nach Patentanspruch 2 oder 3, **dadurch gekennzeichnet, dass**
- die Sensoren (14, 15) je zwei Krafteingänge (16, 17) aufweisen,
- das Rohr (9) für jeden Krafteingang (16, 17) eine geeignet angebrachte Vertiefung aufweist, in welche die Krafteingänge mit Vorspannung eingesetzt sind.

5. Dynamische Schüttungswaage nach Patentanspruch 2 oder 3, **dadurch gekennzeichnet, dass**
- die Sensoren (14, 15) je zwei Krafteingänge (16, 17) aufweisen,
- im Rohr (9) für jeden Krafteingang (16, 17) eine Lasche angeschweisst ist, an welchem der Krafteingang (16, 17) mittels einer Schraubverbindung befestigt ist.

6. Dynamische Schüttungswaage nach Patentansprüchen 2 und 4, **dadurch gekennzeichnet, dass** durch die Messungen des Beschleunigungssensors (6) ein Wiegefenster definiert wird, innerhalb dessen die Beschleunigungswerte eine vorgegebene Schranke nicht überschreiten.

7. Dynamische Schüttungswaage nach Patentansprüchen 2 und 4, **dadurch gekennzeichnet, dass** ein Wiegefenster durch das Vorbeifahren der Hubarme (2) an mindestens einem berührungslosen Schalter definiert ist.

8. Dynamische Schüttungswaage nach Patentanspruch 6 oder 7, **dadurch gekennzeichnet, dass** während des Schüttungsvorganges beim Anheben der Schwenkarme (2) sowohl das Bruttogewicht als auch beim Absenken der Schwenkarme (2) das Taragewicht während der Bewegung gemessen wird.

9. Dynamische Schüttungswaage nach Patentanspruch 6 oder 7, **dadurch gekennzeichnet, dass**
die Bestimmung der Last des vollen oder leeren Kehrichtbehälters (5) bestimmt wird während des Durchfahrens des Wiegefensters.

10. Dynamische Schüttungswaage nach Patentanspruch 2, **dadurch gekennzeichnet, dass** die Schüttung als Frontlader- oder Seitenlader- oder als Heckladervorrichtung ausgebildet ist.

## Claims

1. Dynamic scale for bulk material having two swivel arms (2), which can be moved individually or in unison, two hydraulic cylinders (3) and at least one load holding arm (8) per swivel arm (2), **characterised in that**
- means are available in each swivel arm (2) to measure the shear stress in said swivel arm,
- each independently movable swivel arm (2) carries an acceleration sensor (6), with which the determination of mass can be corrected by the current acceleration value.

2. Dynamic scale for bulk material according to Claim 1,
**characterised in that**
the means for measuring the shear stress in the swivel arm (2) consist of
- a pipe (9), which is inserted into a hole (7) transversely to the neutral fibre of the bending strain of the swivel arm (2) and is welded into said hole (7),
- at least one sensor (14, 15), which is fitted transversely to the longitudinal axis of the pipe (9) in said pipe and can measure the changes in the diameter of the pipe (9) under the influence of the shear stress,
- this at least one sensor (14, 15) is inserted essentially at an angle of ± 45° to the direction of the shear stress *τ*_{xy} of the swivel arm (2).

3. Dynamic scale for bulk material according to Claim 2,
**characterised in that**
two sensors (14, 15) are inserted in the pipe (9) and are arranged at a mutual angle of essentially 90° to each other, wherein the one sensor (14) measures the enlargement of the diameter of the pipe (19), the other sensor (15) its contraction.

4. Dynamic scale for bulk material according to Claim 2 or 3,
**characterised in that**
- the sensors (14, 15) have two force inputs (16, 17) each,
- for each force input (16, 17) the pipe (9) has a suitable recess, in which the force inputs are inserted under pre-tension.

5. Dynamic scale for bulk material according to Claim 2 or 3,
**characterised in that**
- the sensors (14, 15) have two force inputs (16, 17) each,
- for every force input (16, 17) a bracket is welded in the pipe (9), on which the force input (16, 17) is secured by means of a screw connection.

6. Dynamic scale for bulk material according to Claims 2 and 4,
**characterised in that**
a weighing window is defined by the measurements of the acceleration sensor (6), within which the acceleration values do not exceed a given limit.

7. Dynamic scale for bulk material according to Claims 2 and 4,
**characterised in that**
a weighing window is defined by the traversal of the lifting arms (2) past at least one contactless switch.

8. Dynamic scale for bulk material according to Claim 6 or 7,
**characterised in that**
during the tipping process, the gross weight is measured while the swivel arms (2) are raised, and the tare weight while the swivel arms (2) are lowered, while said arms are in motion.

9. Dynamic scale for bulk material according to Claim 6 or 7,
**characterised in that**
the determination of the load of the full or empty refuse container (5) is made during the traversal of the weighing window.

10. Dynamic scale for bulk material according to Claim 2,
**characterised in that**
the tipping device is constructed as a front-loading or side-loading or rear-loading device.

## Revendications

1. Dispositif dynamique de pesage de déchets comprenant deux bras pivotants (2), qui peuvent être manoeuvrés individuellement ou conjointement, deux vérins hydrauliques (3) et au moins un bras de préhension (8) par bras pivotant (2), **caractérisé en ce que**
- dans chaque bras pivotant (2) se trouvent des moyens permettant de mesurer la contrainte de cisaillement dans ce bras pivotant,
- chaque bras pivotant (2) manoeuvrable indépendamment comporte un capteur d'accélération (6), au moyen duquel la valeur d'accélération peut être éliminée de l'évaluation de la masse.

2. Dispositif dynamique de pesage de déchets selon la revendication 1, **caractérisé en ce que** les moyens permettant de mesurer la contrainte de cisaillement dans le bras pivotant (2) se composent
- d'un tube (9), inséré dans un trou (7) perpendiculaire à la fibre neutre de la contrainte de flexion du bras pivotant (2) et soudé dans ce trou (7),
- au moins un capteur (14, 15), inséré dans le tube (9) de manière perpendiculaire à son axe longitudinal et capable de mesurer les variations du diamètre du tube (9) sous l'influence de la contrainte de cisaillement,
- l'au moins un capteur (14, 15) étant essentiellement disposé à un angle de ±45° par rapport au sens de la contrainte de cisaillement τ_{xy} du bras pivotant (2) .

3. Dispositif dynamique de pesage de déchets selon la revendication 2, **caractérisé en ce que** deux capteurs (14, 15) sont insérés dans le tube (9) et essentiellement disposés à un angle de 90° l'un par rapport à l'autre, dans lequel l'un des capteurs (14) mesure l'augmentation du diamètre du tube (19) et l'autre capteur (15) sa diminution.

4. Dispositif dynamique de pesage de déchets selon l'une des revendications 2 ou 3, **caractérisé en ce que**
- les capteurs (14, 15) présentent chacun deux entrées de force (16, 17),
- le tube (9) présente un évidement disposé de manière appropriée pour chacune des entrées de force (16, 17), dans lequel les entrées de force sont logées avec une précontrainte.

5. Dispositif dynamique de pesage de déchets selon l'une des revendications 2 ou 3, **caractérisé en ce que**
- les capteurs (14, 15) présentent chacun deux entrées de force (16, 17),
- une éclisse est soudée dans le tube (9) pour chaque entrée de force (16, 17), sur laquelle est fixée l'entrée de force (16, 17) au moyen d'un assemblage vissé.

6. Dispositif dynamique de pesage de déchets selon les revendications 2 et 4, **caractérisé en ce que** les mesures du capteur d'accélération (6) définissent une fenêtre de pesage à l'intérieur de laquelle les valeurs d'accélération ne dépassent pas une limite prédéfinie.

7. Dispositif dynamique de pesage de déchets selon les revendications 2 et 4, **caractérisé en ce qu'**une fenêtre de pesage est définie par le passage des bras de levage (2) devant au moins un interrupteur sans contact.

8. Dispositif dynamique de pesage de déchets selon l'une des revendications 6 ou 7, **caractérisé en ce que**, au cours du processus de vidage, sont mesurés lors du mouvement aussi bien le poids brut, lorsque les bras pivotants (2) sont relevés, que le poids de tare, lorsque les bras pivotants (2) sont abaissés.

9. Dispositif dynamique de pesage de déchets selon l'une des revendications 6 ou 7, **caractérisé en ce que** la détermination de la charge de la poubelle (5) pleine ou vide est effectuée lors du passage à travers la fenêtre de pesage.

10. Dispositif dynamique de pesage de déchets selon la revendication 2, **caractérisé en ce que** le système de vidage est réalisé sous la forme d'un dispositif de chargement frontal, latéral ou arrière.
